# EUROPÄISCHE PATENTSCHRIFT

(11) **EP 2 360 077 B1**
(45) Veröffentlichungstag und Bekanntmachung des Hinweises auf die Patenterteilung: **15.03.2017**
(21) Anmeldenummer: 11000846.3
(22) Anmeldetag: 03.02.2011
(51) Int. Cl.: B60W 30/16, B60W 10/18, B60W 10/10, B60W 50/08

(54) **Kraftfahrzeug mit Stop&Go Funktion**
Motor vehicle with stop&go function
Véhicule automobile avec fonction arrêt-démarrage

(30) Priorität: 13.02.2010 DE 102010007899
(43) Veröffentlichungstag der Anmeldung: 24.08.2011
(73) Patentinhaber: Audi AG, 85045 Ingolstadt (DE)
(72) Erfinder: Holzmann, Manfred, 91171 Greding (DE); Limbacher, Reimund, 85055 Ingolstadt (DE); Breu, Alexander, 93495 Weiding (DE)
(74) Vertreter: Thielmann, Frank

(56) Entgegenhaltungen:
- EP-A1- 1 702 786
- DE-A1- 19 632 863
- DE-A1-102007 021 831
- DE-A1-102007 028 567

## Beschreibung

Die Erfindung betrifft ein Kraftfahrzeug umfassend ein elektronisch schaltbares Getriebe, eine elektronisch gesteuert einlegbare Parkbremse, sowie ein automatisches Längsführungssystem mit Stop-&-Go-Funktion umfassend ein Steuergerät, das bei einem vom Längsführungssystem erwirkten Stillstand des Kraftfahrzeugs automatisch das Einlegen der Parkbremse veranlasst.

Moderne Kraftfahrzeuge verfügen häufig über ein elektronisch schaltbares Getriebe, häufig auch "shift-by-wire"-Automatikgetriebe genannt, bei denen die einzelnen Getriebefahrstufen (üblicherweise P, R, N, D) also nicht wie früher üblich über einen Wählhebel mit mechanischer Verbindung zum Getriebe, sondern über elektrische Schaltsignale und ein entsprechendes Getriebesteuergerät eingelegt werden. Solche Kraftfahrzeuge verfügen üblicherweise auch über eine elektronisch gesteuert einlegbare Parkbremse. Dieses System betätigt eine das Fahrzeug im Stillstand fixierende elektromechanische Bremse ebenfalls über ein elektronisches Ansteuersignal. Darüber hinaus ist in modernen Kraftfahrzeugen häufig auch ein automatisches Längsführungssystem mit Stop-&-Go-Funktion verbaut. Ein solches Längsführungssystem, häufig auch "ACC-System" (ACC = Adaptive Cruise Control) genannt, führt das Fahrzeug automatisch in Längsrichtung, hält also einen bestimmten Abstand zum vorausfahrenden Fahrzeug ein und ist darüber hinaus in der Lage, das Kraftfahrzeug automatisch in den Stand zu bremsen und wieder anzufahren. Derartige Längsführungssysteme sind hinlänglich bekannt. Aktuelle Längsführungssysteme mit Stop-&-Go-Funktion sind mitunter derart ausgelegt, dass sie sich automatisch abschalten, wenn sie zuvor das Kraftfahrzeug automatisch aktiv in den Stillstand gebremst haben, und steuern einen sicheren Stillstandszustand durch aktives Einlegen der elektronischen Parkbremse an, wenn wenigstens ein vorbestimmtes Ereignis, das eine Sicherung des Stillstands erfordert, erfasst wird. Das heißt, dass in einem solchen Fall das Längsführungssystem sich automatisch abschaltet und zur Sicherung des Stillstands die elektronische Parkbremse einlegen lässt, wozu das Steuergerät des Längsführungssystems das Steuergerät des Parkbremssystems ansteuert. Ein mögliches Ereignis, das zu diesem Vorgang führt, ist beispielsweise, wenn im aktiv gebremsten Stillstand eine beliebige Tür des Fahrzeugs geöffnet wird, wenn die Motorhaube geöffnet wird, oder wenn der aktiv gebremste Stillstand länger als eine vorbestimmte Zeitdauer beibehalten wird.

Der sichere Fahrzeugzustand wird jedoch nicht nur durch das Einlegen der elektromechanischen Parkbremse eingestellt, vielmehr wird bei Fahrzeugen mit elektronisch schaltbarem Getriebe über das Längsführungssystem zusätzlich auch das Einlegen der P-Fahrstufe, also der getriebeseitigen Parkstufe angefordert, das heißt, dass das Steuergerät des Längsführungssystems das Getriebesteuergerät entsprechend ansteuert, damit dortseits die P-Fahrstufe eingelegt wird. Das heißt, dass das Fahrzeug quasi doppelt gesichert ist, einmal durch die elektronisch eingelegte elektromechanische Parkbremse, zum anderen durch die eingelegte P-Fahrstufe im Getriebe. Die P-Fahrstufe wird aus Redundanzgründen eingelegt.

In diversen Betriebssituationen, die im aktiv über das Längsführungssystem gebremsten Stillstand zum Herstellern des sicheren Stillstands führen (also Einlegen der elektromechanischen Parkbremse und der P-Fahrstufe), ist es aus Handhabungsgründen jedoch ungünstig, wenn die elektromechanische Parkbremse und zusätzlich die P-Fahrstufe eingelegt wird. Denn wenn der Fahrer unmittelbar danach wieder die Fahrt fortsetzen möchte, ist er jedes Mal gezwungen, sowohl die elektromechanische Parkbremse zu öffnen als auch eine eine Fahrt ermöglichende Getriebefahrstufe, also entweder D oder R, anzuwählen.

Aus EP 1 702 786 A1 ist ein System zur Geschwindigkeitsregelung für ein Kraftfahrzeug bekannt, das ein elektronisch schaltbares Getriebe, eine elektronisch gesteuert einlegbare Parkbremse, sowie ein automatisches Längsführungssystem mit Stop-and-Go-Funktion mit einem Steuergerät, das bei einem vom Längsführungssystem erwirkten Stillstand des Kraftfahrzeugs automatisch das Einlegen der Parkbremse veranlasst, offenbart.

Aus DE 10 2007 028567 A1 ist eine Einrichtung zum Betrieb einer Bremseinrichtung bei Kraftfahrzeugen bekannt, bei der von dem Zeitpunkt an, in dem der Fahrer seine Fahrposition verlässt oder eine solche Absicht detektiert wurde, überprüft wird, ob die Funktion der Feststellbremse beeinträchtigt ist. Anschließend kann dem Fahrer, wenn dieser seine Fahrposition verlässt, ein akustisches und/oder optisches Signal und/oder eine Anzeige im Fahrzeug ausgegeben werden.

Der Erfindung liegt damit das Problem zugrunde, ein Kraftfahrzeug anzugeben, das in seiner Handhabung verbessert ist.

Zur Lösung dieses Problems ist bei einem Kraftfahrzeug der eingangs genannten Art erfindungsgemäß vorgesehen, dass nur bei Erfassung einer möglichen oder gegebenen Fehlfunktion beim Einlegen der Parkbremse seitens des Steuergeräts des Längsführungssystems eine an den Fahrer gerichtete Aufforderung zum aktiven Einlegen der P-Fahrstufe des Getriebes ausgebbar oder die P-Fahrstufe automatisch über das Steuergerät gesteuert einlegbar ist.

Beim erfindungsgemäßen Kraftfahrzeug wird, wenn ein sicherer Stillstand des Kraftfahrzeugs aufgrund der Erfassung eines diesen Zustand erfordernden Ereignisses erreicht werden soll, lediglich die elektromechanische Parkbremse eingelegt. Nur dann, wenn sich hierbei eine mögliche Fehlfunktion ergibt, wenn also möglicherweise oder tatsächlich die Parkbremse nicht hat eingelegt werden können, wird auf die zweite Sicherungsmöglichkeit über die P-Fahrstufe des Getriebes zurückgegriffen. Die Sicherung kann dabei entweder dadurch erfolgen, dass der Fahrer aktiv aufgefordert wird, selbst, also manuell die P-Fahrstufe des Getriebes anzuwählen, so dass er eine Information darüber erhält, dass ein möglicher Fehlerfall gegeben ist, und er aktiv die Fahrzeugsicherung erwirken muss. Alternativ und bevorzugt erfolgt das Einlegen der P-Fahrstufe jedoch automatisch gesteuert über das Steuergerät des Längsführungssystems, das eine mögliche oder gegebene Fehlfunktion im Parkbremssystem erfasst und umgehend das Getriebesteuergerät zum Einlegen der P-Fahrstufe ansteuert. Dies erfolgt wie gesagt aber nur, wenn eben eine Fehlfunktion möglich oder gegeben ist und eine alternative Sicherungsmöglichkeit erforderlich ist.

Für den Fahrer hat dies den Vorteil, dass in den allermeisten Fällen, wenn nämlich keine mögliche oder gegebene Fehlfunktion des Parkbremssystems detektiert wurde, er lediglich die elektromechanische Parkbremse lösen muss, um das Fahrzeug wieder anfahren zu können, das heißt, dass die vor dem aktiven Bremsen in den Stillstand eingelegte Getriebefahrstufe nach wie vor eingelegt ist und der Fahrer, der den Motor während der Stillstandszeit selbstverständlich nicht abgestellt respektive die Zündung ausgeschaltet hat, sofort nach Lösen der Parkbremse wieder anfahren kann, ohne in irgendeiner Weise die Getriebefahrstufe verändern zu müssen. Wird die Parkbremse automatisch beim Anfahren gelöst, muss der Fahrer nicht einmal hierfür aktiv tätig werden. In möglichen Fehlerfällen, bei denen wahrscheinlich oder tatsächlich die elektromechanische Parkbremse nicht oder nicht korrekt schließen konnte, wird hingegen jedoch der sichere Stillstand über die P-Fahrstufe des Getriebes erreicht, also die im Fahrzeug vorhandene Redundanz genutzt, jedoch nur dann und nicht grundsätzlich, wie bisher im Stand der Technik der Fall.

Eine Fehlfunktion, die zum Ausgeben der Einlegeaufforderung der P-Fahrstufe oder zum automatischen Einlegen der P-Fahrstufe führt, kann in unterschiedlichen Formen gegeben sein. Eine Fehlfunktion kann beispielsweise bei Vorliegen eines Kommunikationsfehlers zwischen einem das Einlegen der Parkbremse steuernden Steuergerät und dem Steuergerät des Längsführungssystems gegeben sein. Wie bereits beschrieben, kommuniziert das Steuer des Längsführungssystems, das letztlich als übergeordnetes Steuergerät für die Schaffung des sicheren Stillstandszustands verantwortlich ist, mit einem Steuergerät des Parkbremssystems, das seinerseits die entsprechende Aktuatorik zum Betätigen der Parkbremse ansteuert. Ergibt sich nun im Rahmen dieser Kommunikation ein Fehler, so wird dies automatisch als eine mögliche Fehlfunktion beim Einlegen der Parkbremse gewertet, woraufhin es zum automatischen Einlegen der P-Fahrstufe, gesteuert über das Steuergerät des Längsführungssystems, oder zum Ausgeben der Fahreraufforderung kommt. Ein möglicher Kommunikationsfehler kann beispielsweise anhand eines Timeout erfasst werden, oder anhand eines Botschaftszählers, wie auch anhand des DLC (Data Length Code) und der Checksumme der vom Längsführungssystem-Steuergerät empfangenen Signale des Parkbremssystem-Steuergeräts.

Eine mögliche Fehlfunktion kann auch bei Vorliegen einer vom das Einlegen der Parkbremse steuernden Steuergerät an das Steuergerät des Längsführungssystems gegebenen Fehlermeldung gegeben sein. Empfängt das Parkbremssystem-Steuergerät fehlerhafte Signale vom Längsführungssystem-Steuergerät, so generiert es eine Fehlermeldung, also ein Fehlerflag, und sendet dieses an das Längsführungssystem-Steuergerät, das sodann einen möglichen Kommunikationsfehler kennt. Ein solcher Kommunikationsfehler kann wiederum anhand eines Timeout, anhand des Botschaftszählers, des DLC und der Checksumme der vom Parkbremssystem-Steuergerät empfangenen Signale des Längsführungssystem-Steuergeräts erfasst werden.

Schließlich kann eine Fehlfunktion auch bei Erfassung einer Funktionsstörung eines das Einlegen der Parkbremse erwirkenden Aktuators, welche Funktionsstörung, vorzugsweise vom das Einlegen der Parkbremse steuernden Steuergerät, als Fehlermeldung an das Steuergerät des Längsführungssystems gegeben wird, gegeben sein. Das Parkbremssystem respektive das systemseitige Steuergerät führt, wenn es das Einlegen der Parkbremse ansteuert, kontinuierlich eine Eigendiagnose durch, worüber sofort etwaige Fehler beim Einlegen der Parkbremse erfasst werden. Ist also die Aktuatorik fehlerhaft, kann beispielsweise ein Stellelement und Ähnliches nicht korrekt angesteuert werden oder kann dieses seinen Betrieb nicht korrekt ausüben, so wird dies seitens des Parkbremssystem-Steuergeräts erfasst und umgehend eine Fehlermeldung (Fehlerflag oder Fehlerwert) an das Längsführungssystem-Steuergerät gemeldet. Dieses erwirkt sodann wiederum das automatische Einlegen der P-Fahrstufe oder das Ausgeben der Aufforderung.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Prinzipdarstellung eines erfindungsgemäßen Kraftfahrzeugs,
- Fig. 2: eine Prinzipdarstellung der relevanten Fahrzeugkomponenten zur Erläuterung des Betriebs ohne Fehlfunktion, und
- Fig. 3: die Darstellung gemäß Fig. 2 zur Erläuterung des Betriebs mit Fehlfunktion.

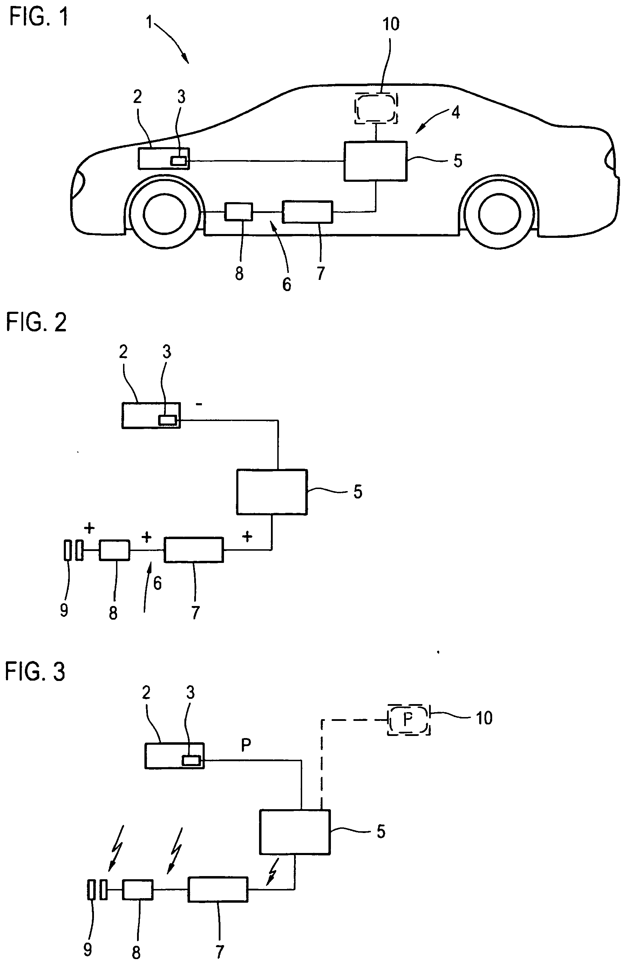

Fig. 1 zeigt ein erfindungsgemäßes Kraftfahrzeug 1, umfassend ein elektronisch schaltbares Getriebe 2 mit einem Getriebesteuergerät 3, das über ein von ihm empfangenes elektronisches Ansteuersignal die jeweilige gewünschte Getriebefahrstufe einlegt. Üblicherweise werden die elektronischen Signale betreffend die einzulegende Fahrstufe vom Fahrer über ein Wählelement, beispielsweise den an sich bekannten Wählhebel oder einen Drehschalter oder Ähnliches, gegeben.

Vorgesehen ist ferner ein Längsführungssystem 4, über das das Fahrzeug automatisch gesteuert beispielsweise einem vorausfahrenden Fahrzeug folgt, und über das das Fahrzeug auch aktiv in den Stand gebremst und wieder angefahren werden kann. Es ist also ein Längsführungssystem mit Stop-&-Go-Funktion. Der Einfachheit halber ist vom Längsführungssystem 4 lediglich sein Steuergerät 5 gezeigt, das selbstverständlich mit einer Vielzahl unterschiedlichster, nicht näher gezeigter Fahrzeugkomponenten kommuniziert.

Weiterhin vorgesehen ist ein Parkbremssystem 6 umfassend ein Steuergerät 7, mittels dem auf eine geeignete Aktuatorik 8 zugegriffen wird, über die wiederum eine Parkbremse, die das Fahrzeug im Stillstand sichert, betätigt wird.

Bei dem erfindungsgemäßen Kraftfahrzeug 1 kommuniziert das Steuergerät 5 des Längsführungssystems 4 sowohl mit dem Steuergerät 7 des Parkbremssystems 6 als auch mit dem Getriebesteuergerät 3 des Getriebes 2. Ist das Längsführungssystem 4 aktiv, kann die Situation eintreten, dass es das Kraftfahrzeug 1 durch Ansteuerung des Bremssystems des Fahrzeugs aktiv in den Stillstand bremst. Je nach Situation kann es nun erforderlich sein, dass in diesem Zustand eine Stillstandssicherung erfolgen muss. Ob eine solche Situation vorliegt, wird durch Erfassen bestimmter, gegebenenfalls eintretender Ereignisse bei noch laufendem Motor oder eingeschalteter Zündung bestimmt. Eine solche Situation kann beispielsweise dann gegeben sein, wenn über eine geeignete Sensorik erfasst wird, dass irgendeine der Fahrzeugtüren geöffnet wird. Auch kann das Öffnen der Motorhaube, wenn beispielsweise das Fahrzeug an einer Tankstelle steht, ein solches Ereignis sein. Insbesondere ist als ein solches Ereignis eine hinreichende Stillstandszeit zu nennen. Mit Erreichen des Stillstands beginnt ein Timer zu laufen. Ist der Stillstandszustand, in dem das Fahrzeug über das Längsführungssystem 4 aktiv im Stillstand gebremst gehalten wird, beispielsweise für 3 Minuten ohne Änderung beibehalten, so wird auch dies als Ereignis angesehen, das eine aktive Stillstandssicherung verlangt.

Tritt ein solches Ereignis ein, so schaltet sich das Längsführungssystem 4 automatisch ab. Zur Stillstandssicherung wird nun über ein geeignetes Ansteuerungssignal vom Steuergerät 5 an das Steuergerät 7 des Parkbremssystems 6 gegeben, woraufhin die Parkbremse durch Ansteuerung der Aktuatorik 8 eingelegt wird. Das Fahrzeug ist nun gesichert. Möchte der Fahrer losfahren, so muss er aktiv die Parkbremse lösen, was üblicherweise durch Betätigen eines Bedienknopfs oder Ähnlichem im Fahrzeuginneren erfolgt.

Das erfindungsgemäße Kraftfahrzeug 1 ermöglicht eine Stillstandssicherung aber nicht nur über das Parkbremssystem 6, sondern auch durch Einlegen der P-Fahrstufe im Getriebe 2. Diese Stillstandssicherungsoption wird dann gewählt, wenn aus irgendwelchen Gründen nicht sichergestellt ist, dass das Parkbremssystem 6 auch tatsächlich korrekt die Parkbremse aktivieren konnte, wenn also mithin ein möglicher oder gegebener Fehlerfall vorliegt. In einem solchen Fall steuert das Steuergerät 5 automatisch das Getriebesteuergerät 3 an und veranlasst es, zur Stillstandssicherung die P-Fahrstufe einzulegen. Die Ansteuerung des Parkbremssystems 6 wird in diesem Fall wieder aufgehoben.

Die Figuren 2 und 3 zeigen als Prinzipschaubilder die Funktion der Stillstandssicherung.

Fig. 2 zeigt die Situation, bei der seitens des Parkbremssystems 6 kein Fehler vorhanden ist, wie auch ansonsten kein Kommunikationsfehler innerhalb der Kommunikation zwischen den Steuergeräten 5 und 7 gegeben ist. Dies ist durch die beiden "+"-Symbole in den jeweiligen Kommunikationspfaden zwischen den beiden Steuergeräten 5 und 7 und dem Steuergerät 7 und der Aktuatorik 8 dargestellt. Das heißt , dass hier kein Fehler auftritt, mithin also die Ansteuerung korrekt erfolgt. Ein weiteres "+"-Symbol findet sich an der Parkbremse 9 selbst, die hier exemplarisch über die symbolischen Bremsbacken dargestellt ist. Auch die mechanische Parkbremsfunktion ist also fehlerfrei. Die Kommunikation innerhalb des Parkbremssystems 6 sowie die Prüfung auf etwaige mechanische Störungen erfolgt seitens des Steuergeräts 7 im Rahmen einer bei jeder Betätigung vorgenommenen Eigendiagnose und wird folglich genau erfasst.

Nachdem gemäß Fig. 2 also die Parkbremse 9 fehlerfrei eingelegt wurde, ist eine redundante Ansteuerung des Getriebesteuergeräts 3 zum Einlegen der P-Fahrstufe nicht erforderlich, da allein über das Parkbremssystem 6 eine ausreichende Stillstandssicherung erfolgt.

Fig. 3 zeigt den Problemfall. Wie durch die Blitzsymbole dargestellt, kann eine Fehlfunktion sowohl in den jeweiligen Kommunikationspfaden zwischen den Steuergeräten 5 und 7 sowie dem Steuergerät 7 und der Aktuatorik 8 gegeben sein, wie auch ein mechanischer Fehlerfall seitens der Parkbremse 9 selbst gegeben sein kann. Ein möglicher Kommunikationsfehler kann darin bestehen, dass das Steuergerät 5 keine oder fehlerhafte Signale vom Steuergerät 7 empfängt. Dies kann über eine Timeout-Erkennung, den Botschaftszähler oder einen Checksummenvergleich und Ähnliches erfasst werden. In entsprechender Weise kann auch das Steuergerät 7 fehlerhafte Signale vom Steuergerät 5 empfangen, die in gleicher Weise erfasst werden können. Das Steuergerät 7 sendet daraufhin eine Fehlermeldung an das Steuergerät 5, das dann sofort erkennt, dass die Parkbremse 9 nicht eingelegt werden kann.

Auch kann sich ein Kommunikationsfehler zwischen dem Steuergerät 7 und der nachgeschalteten Aktuatorik 8, die hierüber angesteuert wird, ergeben. Stellt das Steuergerät 7 hier einen Fehler fest, so wird ebenfalls eine Fehlermeldung an das Steuergerät 5 gegeben. Ebenso kann es zu mechanischen Fehlern kommen. Diese werden im Rahmen der üblichen Eigendiagnose vom Steuergerät 7 erfasst, etwaige Fehler werden ebenfalls als Fehlermeldung an das Steuergerät 5 gegeben. Bereits das Vorliegen auch nur eines einzigen Fehlers ist ausreichend, damit seitens der Steuerungseinrichtung 5 davon ausgegangen wird, dass die Stillstandssicherung über das Parkbremssystem 6 nicht möglich ist. Um in diesem Fall dennoch eine Stillstandssicherung vornehmen zu können, steuert das Steuergerät 5 nun das Getriebesteuergerät 3 an und veranlasst, dass dieses die P-Fahrstufe einlegt, um das Kraftfahrzeug 1 zu sichern. Dieses Ansteuersignal ist mit P in Fig. 3 dargestellt.

Alternativ zum automatischen Einlegen der P-Fahrstufe, wie bezüglich der Figuren 1 - 3 vorstehend beschrieben, ist die Möglichkeit gegeben, dass das Steuergerät 5 im Falle einer erfassten Fehlfunktion eine an den Fahrer gerichtete Aufforderung zum aktiven Einlegen der P-Fahrstufe ausgibt. Diese Option ist in Fig. 1 und Fig. 3 lediglich gestrichelt über den Monitor 10 dargestellt, an dem, siehe Fig. 3, im erfassten Fehlerfall eine optische Aufforderung, dargestellt durch das "P", ausgegeben wird. Der Fahrer ist nun gefordert, zur Stillstandssicherung aktiv manuell die P-Fahrstufe einzulegen oder die Fahrzeugbremse durch Treten des Bremspedals zu betätigen und das Fahrzeug selbst zu übernehmen. Denkbar wäre auch eine akustische Aufforderung über ein fahrzeugseitig verbautes Infotainmentsystem.

## Patentansprüche

1. Kraftfahrzeug (1) umfassend ein elektronisch schaltbares Getriebe (2), eine elektronisch gesteuert einlegbare Parkbremse (9), sowie ein automatisches Längsführungssystem (4) mit Stop-&-Go-Funktion umfassend ein Steuergerät (5), das bei einem vom Längsführungssystem (4) erwirkten Stillstand des Kraftfahrzeugs (1) automatisch das Einlegen der Parkbremse (9) veranlasst,
**dadurch gekennzeichnet,**
**dass**
nur bei Erfassung einer möglichen oder gegebenen Fehlfunktion beim Einlegen der Parkbremse (9), aufgrund welcher Fehlfunktion die Parkbremse (9) nicht eingelegt werden kann, seitens des Steuergeräts (5) des Längsführungssystems (4)
- eine an den Fahrer gerichtete Aufforderung zum aktiven Einlegen der P-Fahrstufe des Getriebes (2) ausgebbar oder
- die P-Fahrstufe automatisch über das Steuergerät (5) gesteuert einlegbar ist.

2. Kraftfahrzeug nach Anspruch 1,
**dadurch gekennzeichnet,**
**dass** eine Fehlfunktion bei Vorliegen eines Kommunikationsfehlers im Rahmen der Kommunikation zwischen einem das Einlegen der Parkbremse (9) steuernden Steuergerät (7) und dem Steuergerät (5) des Längsführungssystems (4) gegeben ist.

3. Kraftfahrzeug nach Anspruch 1 oder 2,
**dadurch gekennzeichnet,**
**dass** eine Fehlfunktion bei Vorliegen einer vom das Einlegen der Parkbremse (9) steuernden Steuergerät (7) an das Steuergerät (5) des Längsführungssystems (4) gegebenen Fehlermeldung, welche vom Steuergerät (7), insbesondere beim Empfang fehlerhafter, vom Längsführungssystem (4) an das Steuergerät (7) gesendeter Signale generierbar ist, gegeben ist.

4. Kraftfahrzeug nach einem der vorangehenden Ansprüche,
**dadurch gekennzeichnet,**
**dass** eine Fehlfunktion bei Erfassung einer Funktionsstörung eines das Einlegen der Parkbremse (9) erwirkenden Aktuators (8), die, vorzugsweise vom das Einlegen der Parkbremse (9) steuernden Steuergerät (7), als Fehlermeldung an das Steuergerät (5) des Längsführungssystems (4) gegeben wird, gegeben ist.

## Claims

1. Motor vehicle (1) comprising an electronically switchable transmission (2), a parking brake (9) which can be engaged under electronic control, and an automatic longitudinal control system (4) with a stop & go function, comprising a control device (5) which automatically causes engagement of the parking brake (9) in the event the motor vehicle (1) stopping, brought about by the longitudinal control system (4),
**characterised in that**
only on detection of a possible or given malfunction during the engagement of the parking brake (9), because of which malfunction the parking brake (9) cannot be engaged, by the control device (5) of the longitudinal control system (4)
- a request addressed to the driver for active engagement of the P gear selection of the transmission (2) can be emitted, or
- the P gear selection can be engaged automatically under the control of the control device (5).

2. Motor vehicle according to claim 1,
**characterised in that**
a malfunction is given when there is a communication fault in the scope of the communication between a control device (7) controlling the engagement of the parking brake (9) and the control device (5) of the longitudinal control system (4).

3. Motor vehicle according to claim 1 or 2,
**characterised in that**
a malfunction is given when there is a fault message given by the control device (7) controlling the engagement of the parking brake (9) to the control device (5) of the longitudinal control system (4), which message may be generated by the control device (7), in particular on reception of defective signals sent from the longitudinal control system (4) to the control device (7).

4. Motor vehicle according to one of the preceding claims,
**characterised in that**
a malfunction is given on detection of a functional impairment of an actuator (8) bringing about the engagement of the parking brake (9), this preferably being given by the control device (7) controlling the engagement of the parking brake (9) as a fault message to the control device (5) of the longitudinal control system (4).

## Revendications

1. Véhicule automobile (1) comprenant une boîte de vitesses (2) à commutation électronique, un frein de stationnement (9) pouvant être serré par commande électronique ainsi qu'un système de guidage longitudinal (4) automatique avec une fonction arrêt-démarrage automatique comprenant un appareil de commande (5), qui provoque automatiquement le serrage du frein de stationnement (9) lorsque le véhicule automobile (1) est immobilisé par le système de guidage longitudinal (4),
**caractérisé en ce**
**que**
seulement en cas de détection d'un dysfonctionnement possible ou existant lors du serrage du frein de stationnement (9), en raison duquel dysfonctionnement le frein de stationnement (9) ne peut pas être serré, du côté de l'appareil de commande (5) du système de guidage longitudinal (4)
- une demande adressée au conducteur peut être émise aux fins de la sélection active de la position P de la boîte de vitesses (2) ou
- la position P peut être sélectionnée automatiquement de manière commandée par l'intermédiaire de l'appareil de commande (5).

2. Véhicule automobile selon la revendication 1,
**caractérisé en ce**
**qu'**un dysfonctionnement est existant en présence d'une erreur de communication dans le cadre de la communication entre un appareil de commande (7) commandant le serrage du frein de stationnement (9) et l'appareil de commande (5) du système de guidage longitudinal (4).

3. Véhicule automobile selon la revendication 1 ou 2,
**caractérisé en ce**
**qu'**un dysfonctionnement est existant en présence d'un message d'erreur, qui est donné par l'appareil de commande (7) commandant le serrage du frein de stationnement (9) à l'appareil de commande (5) du système de guidage longitudinal (4) et qui peut être généré par l'appareil de commande (7), notamment lors de la réception de signaux erronés envoyés par le système de guidage longitudinal (4) à l'appareil de commande (7).

4. Véhicule automobile selon l'une quelconque des revendications précédentes,
**caractérisé en ce**
**qu'**un dysfonctionnement est existant lors de la détection d'une défaillance d'un actionneur (8) provoquant le serrage du frein de stationnement (9), laquelle défaillance est signalée sous forme de message d'erreur à l'appareil de commande (5) du système de guidage longitudinal (4) de préférence par l'appareil de commande (7) commandant le serrage du frein de stationnement (9).
